# NEUE EUROPÄISCHE PATENTSCHRIFT

(11) **EP 2 331 331 B2**
(45) Veröffentlichungstag und Bekanntmachung des Hinweises auf die Entscheidung über den Einspruch: **18.03.2015**
(45) Hinweis auf die Patenterteilung: 07.12.2011
(21) Anmeldenummer: 09780046.0
(22) Anmeldetag: 01.07.2009
(51) Int. Cl.: B41F 33/00

(54) **DRUCKMASCHINENSTEUERUNGSSYSTEM**
PRINTING MACHINE CONTROL SYSTEM
SYSTEME DE COMMANDE D'UNE MACHINE D'IMPRESSION

(30) Priorität: 23.08.2008 DE 102008039485
(43) Veröffentlichungstag der Anmeldung: 15.06.2011
(73) Patentinhaber: manroland sheetfed GmbH, 63075 Offenbach (DE)
(72) Erfinder: FEJFAR, Florian, 81476 München (DE); FRITSCHER, Manfred, 63512 Hainburg (DE); HAUCK, Shahram, 63452 Hanau (DE)
(74) Vertreter: Stahl, Dietmar
(86) Internationale Anmeldenummer: PCT/EP2009/058232
(87) Internationale Veröffentlichungsnummer: WO 2010/022998

(56) Entgegenhaltungen:
- EP-A- 0 337 148
- EP-B1- 0 337 148
- DE-U1- 29 507 302
- 'Image Control,der Leitfaden zum Gerät', 2003 vol. HEIDELBERGER DRUCKMASCHINEN AG, Seiten 1 - 54

## Beschreibung

Die Erfindung betrifft ein Druckmaschinensteuerungssystem nach dem Oberbegriff des Anspruchs 1.

Als farbverbindliche Referenz bei der Ausführung eines Druckauftrags auf einer Druckmaschine, wie z. B. auf einer Rollenrotationsdruckmaschine oder auf einer Bogendruckmaschine, dient nach der Praxis üblicherweise ein auf einem Farbtintenstrahldrucker angefertigtes Referenzmuster, wobei ein Drucker die auf der Druckmaschine gedruckten Druckexemplare mit diesem Referenzmuster an einem Leitstand eines Druckmaschinensteuerungssystems der Druckmaschine vergleicht. Solche auf einem Farbtintenstrahldrucker geduckten Referenzmuster bezeichnet man auch als Hardcopyproof.

Aus der DE 10 2006 038 200 A1 ist es bereits bekannt, zusätzlich zu dem oder als Ersatz für das auf dem Farbtintenstrahldrucker angefertigte Hardcopyproof eine farbverbindliche Referenz auf einem farbverbindlichen Monitor zu visualisieren.
Die Visualisierung einer farbverbindliche Referenz auf einem farbverbindlichen Monitor wird auch als Softproof bezeichnet. Eine entsprechende Softproofeinrichtung, die mindestens einen farbverbindlichen Monitor umfasst, ist dabei typischerweise Bestandteil des Leitstands des Druckmaschinensteuerungssystems, wobei eine Softproofeinrichtung in einem Druckvorstufen-Farbraum vorliegende Druckvorstufendaten in Anzeigedaten eines Monitor-Farbraums wandelt. Der Druckvorstufen-Farbraum ist typischerweise ein CMYK-Farbraum der Prozessfarben Cyan, Magenta, Gelb und Schwarz des autotypischen Zusammendrucks oder ein Spot-Color-Farbraum. Der Monitor-Farbraum ist typischerweise ein RGB-Farbraum der Anzeigefarben Rot, Grün und Blau des farbverbindlichen Monitors.

Weiterhin ist es aus der Praxis bereits bekannt, dass ein Druckmaschinensteuerungssystem neben einer Softproofeinrichtung weiterhin eine Farbregeleinrichtung umfasst, die gegenüber der Softproofeinrichtung als vollkommen selbstständige, autarke Einrichtung ausgebildet ist. Die Farbregeleinrichtung umfasst dabei mindestens einen Sensor, um einen bedruckten Bedruckstoff zumindest abschnittsweise zu vermessen und hierbei Istdaten zu gewinnen, wobei die Farbregeleinrichtung die mit Hilfe des oder jeden Sensors gemessenen Istdaten oder aus den gemessenen Istdaten generierte Daten mit entsprechenden Solldaten vergleicht und abhängig hiervon Stellsignale für Stellglieder der Farbregeleinrichtung derart erzeugt, dass sich die Istdaten den Solldaten annähern. Dabei sind, wie bereits ausgeführt, die Farbregeleinrichtung und die Softproofeinrichtung als vollkommen getrennte, separate und demnach autarke Einrichtungen ausgeführt.

Aus den oben beschriebenen Zusammenhängen folgt, dass Softproofeinrichtungen von aus dem Stand der Technik bekannten Druckmaschinensteuerungssystemen eine rein visuelle, subjektive Referenz ohne Beziehung zu Messwerten der Farbregeleinrichtung anzeigen.

Den Farbregeleinrichtungen bekannter Druckmaschinensteuerungssysteme fehlt die visuelle Vergleichsmöglichkeit, so dass ein Drucker bedruckte Druckexemplare aus dem Produktionsfluss entnehmen und mit einem angezeigten Softproof und/oder einem Hardcopyproof im Bereich des Leitstands des Druckmaschinensteuerungssystems vergleichen muss.

Hiervon ausgehend liegt der vorliegenden Erfindung das Problem zugrunde ein neuartiges Druckmaschinensteuerungssystem zu schaffen.

Dieses Problem wird durch ein Druckmaschinensteuerungssystem gemäß Anspruch 1 gelöst.

Erfindungsgemäß wandelt mindestens eine Einrichtung die Druckvorstufendaten des Druckvorstufen-Farbraums und die Anzeigedaten des Monitor-Farbraums in Referenzdaten eines farbmetrischen Farbraums, wobei die so aus den Daten der Softproofeinrichtung generierten Referenzdaten als Solldaten der Farbregeleinrichtung dienen, sodass dieselbe aus einem Vergleich der gemessenen Istdaten des oder jeden Sensors oder der aus den gemessenen Istdaten generierten Daten mit den Referenzdaten Stellsignale für die Stellglieder der Farbregeleinrichtung erzeugt.

Beim erfindungsgemäßen Druckmaschinensteuerungssystem existieren die Softproofeinrichtung und die Farbregeleinrichtung nicht mehr als getrennte Systeme unabhängig nebeneinander, vielmehr werden beide Einrichtungen funktional miteinander verknüpft, wodurch es möglich ist, die Vorteile der Softproofeinrichtung und der Farbregeleinrichtung miteinander zu vereinen. Hierzu wandelt eine Einrichtung Daten der Softproofeinrichtung, nämlich die Druckvorstufendaten des Druckvorstufen-Farbraums und die Anzeigedaten des Monitor-Farbraums in Referenzdaten eines farbmetrischen Farbraums der Farbregeleinrichtung. Die Farbregeleinrichtung vergleicht diese aus den Daten der Softproofeinrichtung generierten Referenzdaten mit den gemessenen Istdaten des oder jeden Sensors oder mit den aus den gemessenen Istdaten generierten Daten.

Mindestens eine Einrichtung wandelt die Istdaten und/oder die aus den Istdaten generierten Daten des oder jedes Sensors in Anzeigedaten des Monitor-Farbraums, um mit dem oder jedem Sensor gemessene Bilder auf mindestens einem farbverbindlichen Monitor der Softproofeinrichtung anzuzeigen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine schematisierte Darstellung eines aus dem Stand der Technik bekannten Druckmaschinensteuerungssystems; und
- Fig. 2:: eine schematisierte Darstellung eines erfindungsgemäßen Druckmaschinensteuerungssystems.

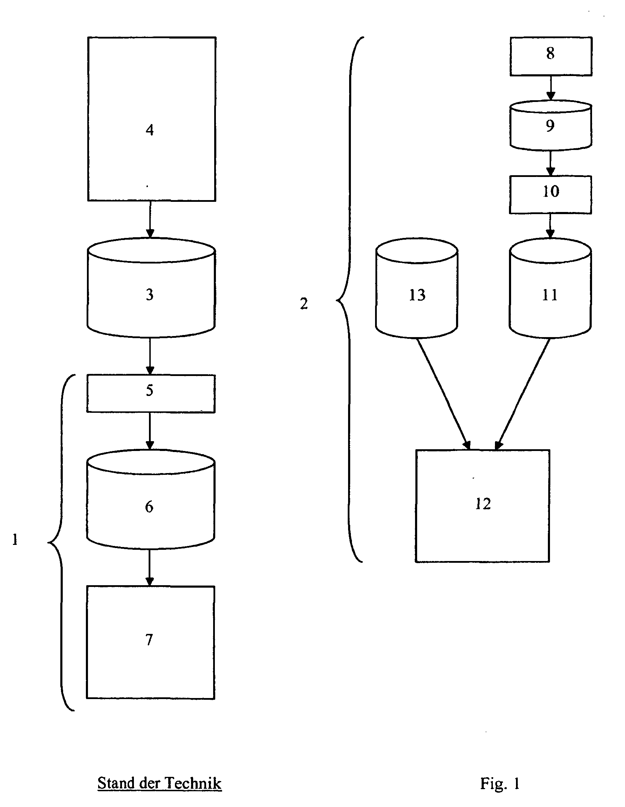

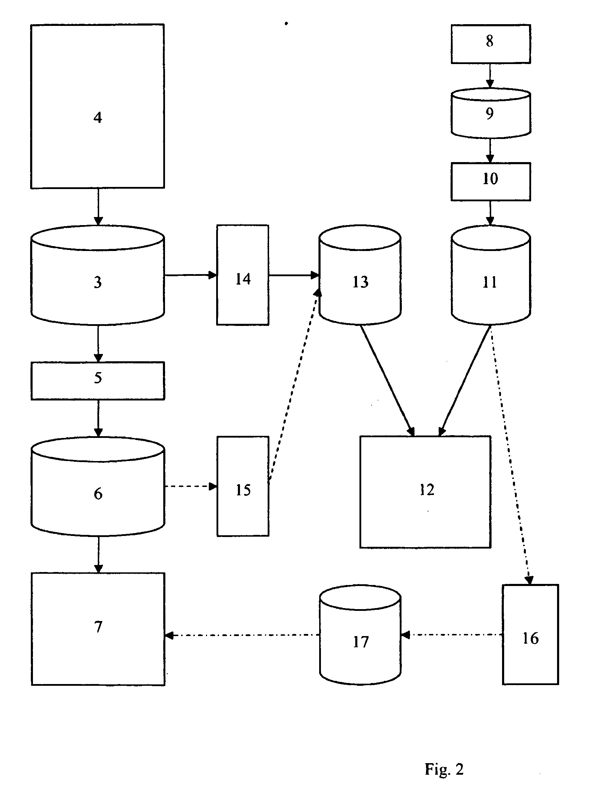

Bevor nachfolgend unter Bezugnahme auf Fig. 2 ein bevorzugtes Ausführungsbeispiel eines erfindungsgemäßen Druckmaschinensteuerungssystems im Detail beschrieben wird, soll nachfolgend unter Bezugnahme auf Fig. 1 ein aus dem Stand der Technik bekanntes Druckmaschinensteuerungssystem beschrieben werden.

Fig. 1 zeigt stark schematisiert ausgewählte Komponenten eines aus dem Stand der Technik bekannten Druckmaschinensteuerungssystems einer Druckmaschine, nämlich einerseits Baugruppen einer Softproofeinrichtung 1 und andererseits Baugruppen einer Farbregeleinrichtung 2, wobei die Softproofeinrichtung 1 und die Farbregeleinrichtung 2 bei dem aus dem Stand der Technik bekannten Druckmaschinensteuerungssystem der Fig. 1 als vollständig separate, getrennte und autarke Einrichtungen ausgebildet sind.

Das Softproofsystem 1 wandelt Druckvorstufendaten 3, die von einem Druckvorstufesystem 4 bereitgestellt werden und in einem Druckvorstufen-Farbraum vorliegen, mit Hilfe einer Einrichtung 5 in Anzeigedaten 6 für einen farbverbindlichen Monitor 7 der Softproofeinrichtung, wobei die Anzeigedaten 6 in einem Monitor-Farbraum des farbverbindlichen Monitors 7 der Softproofeinrichtung 1 vorliegen.

Beim Druckvorstufen-Farbraum der Druckvorstufendaten 3 handelt es sich um einen CMYK-Farbraum der Prozessfarben Cyan, Magenta, Gelb und Schwarz des autotypischen Zusammendrucks oder um einen Spot-Color-Farbraum. Beim Monitor-Farbraum der Anzeigedaten 6 handelt es sich um einen RGB-Farbraum der Anzeigefarben Rot, Grün und Blau des farbverbindlichen Monitors 7.

Die Farbregeleinrichtung 2 des aus dem Stand der Technik bekannten Druckmaschinensteuerungssystems der Fig. 1 verfügt über mindestens einen Sensor 8, mit Hilfe dessen ein bedruckter Bedruckstoff vermessen werden kann, wobei der Sensor 8 gemäß Fig. 1 gemessene Istdaten 9 bereitstellt, die mit Hilfe einer Einrichtung 10 in Daten 11 gewandelt werden, die in einem farbmetrischen Farbraum vorliegen. Die Farbregeleinrichtung 2 vergleicht diese aus den gemessenen Istdaten 9 generierten Daten 11 in einen Regler 12 mit Solldaten 13, die ebenso wie die Daten 11 im farbmetrischen Farbraum vorliegen. Basierend auf dem Vergleich zwischen den aus den Istdaten 9 generierten Daten 11 und den Solldaten 13 erzeugt der Regler 12 Stellsignale für nicht gezeigte Stellglieder der Farbregeleinrichtung 2, die die Farbgebung auf dem Bedruckstoff derart verändern, dass sich die aus den Istdaten 9 generierten Daten 11 den Solldaten 13 annähern.

Es sei darauf hingewiesen, dass der oder jede Sensor 8 unmittelbar Istdaten 9 bereitstellen kann, die im farbmetrischen Farbraum vorliegen. In diesem Fall entfällt dann die Einrichtung 10 und die Daten 11, die mit den Solldaten 13 verglichen werden, entsprechen unmittelbar den Istdaten 9.

Bei dem aus der Praxis bekannten Druckmaschinensteuerungssystem der Fig. 1 sind demnach die Softproofeinrichtung 1 und die Farbregeleinrichtung 2 als vollkommen getrennte Einrichtungen ausgeführt.

Demgegenüber zeigt Fig. 2 ein stark schematisiertes Blockschaltbild eines erfindungsgemäßen Druckmaschinensteuerungssystems, wobei zur Vermeidung unnötiger Wiederholungen für solche Komponenten des Druckmaschinensteuerungssystems der Fig. 2, die bereits beim Druckmaschinensteuerungssystem der Fig. 1 vorhanden sind, gleiche Bezugsziffern verwendet werden.

Das erfindungsgemäße Druckmaschinensteuerungssystem der Fig. 2 umfasst eine Einrichtung 14, welche Druckvorstufendaten 3, die im Druckvorstufen-Farbraum vorliegen, in Referenzdaten eines farbmetrischen Farbraums wandelt, die gemäß Fig. 2 als Solldaten 13 der Farbregeleinrichtung dienen, so dass im Regler 12 die aus den Istdaten 9 des Sensors 8 generierten Daten 11 mit den aus den Druckvorstufendaten 3 generierten Referenzdaten verglichen werden, um Stellsignale für die nicht gezeigten Stellglieder der Farbregeleinrichtung zu erzeugen bzw. zu generieren.

Dabei weisen die aus den Druckvorstufendaten 3 mit Hilfe der Einrichtung 14 erzeugten Referenzdaten bzw. Solldaten 13 dieselbe Auflösung auf, wie die aus den gemessenen Istdaten 9 generierten Daten 11, wobei diese Daten jeweils im farbmetrischen Farbraum vorliegen.

Anstelle der Vorrichtung 14 oder zusätzlich zur Vorrichtung 14 kann gemäß Fig. 2 eine Einrichtung 15 vorhanden sein, die aus den Anzeigedaten 6 der Softproofeinrichtung, die im Monitor-Farbraum vorliegen, die Referenzdaten bzw. Solldaten 13 der Farbregeleinrichtung generiert. Diese verfügen dann wiederum über dieselbe Auflösung wie die aus den gemessenen Istdaten 9 erzeugten Daten 11.

Im Ausführungsbeispiel der Fig. 2 ist zusätzlich eine Einrichtung 16 vorhanden, die aus den im farbmetrischen Farbraum vorliegenden Daten 11, die aus den gemessenen Istdaten 9 erzeugt wurden, Anzeigedaten 17 generiert, die ebenso wie die Anzeigedaten 6 im Monitor-Farbraum des farbverbindlichen Monitors 7 vorliegen. Die aus den Druckvorstufendaten 3 erzeugten Anzeigedaten 6 verfügen dabei über dieselbe Auflösung wie die aus den Istdaten des Sensors 8 generierten Anzeigedaten 17.

Es ist möglich, die Anzeigedaten 17 unmittelbar aus den gemessenen Istdaten 9 zu erzeugen.

Die aus den Istdaten 9 des Sensors 8 generierten Anzeigedaten 17 und die aus den Druckvorstufendaten 3 generierten Anzeigedaten 6 können dabei jeweils auf einem farbverbindlichen Monitor der Softproofeinrichtung getrennt voneinander oder auf ein und demselben farbverbindlichen Monitor der Softproofeinrichtung getrennt voneinander oder auch auf ein und demselben farbverbindlichen Monitor der Softproofeinrichtung gemeinsam miteinander angezeigt werden, wobei das gemeinsam miteinander Anzeigen der Anzeigedaten 6 und 17 derart erfolgt, dass dieselben bildpunktgenau einander überlagert werden.

Das erfindungsgemäße Druckmaschinensteuerungssystem kann die Erzeugung der Referenzdaten 13 für die Farbregeleinrichtung aus den Daten der Softproofeinrichtung, die Generierung der Anzeigedaten 17 für die Softproofeinrichtung aus den Istdaten 9 der Farbregeleinrichtung sowie den Vergleich der gemessenen Istdaten 9 des oder jeden Sensors oder der aus den gemessenen Istdaten generierten Daten 11 mit den aus den Daten der Softproofeinrichtung erzeugten Referenzdaten entweder für das gesamte Druckbild eines bedruckten Bedruckstoffs oder für einzelne ausgewählte Abschnitte des Druckbilds des bedruckten Bedruckstoffs durchführen.

Dann, wenn beim Vergleich der gemessenen Istdaten 9 des oder jeden Sensors oder der aus den gemessenen Istdaten generierten Daten 11 mit den Referenzdaten 13 festgestellt wird, dass in einem oder mehreren Abschnitten des Druckbilds eine einen definierten Grenzwert überscheitende Abweichung zwischen den jeweiligen Daten vorliegt, ist der jeweilige Abschnitt auf dem farbverbindlichen Monitor der Softproofeinrichtung abweichend von den Abschnitten darstellbar, bei welchen die Abweichung zwischen den jeweiligen Daten kleiner als der Grenzwert ist. So kann einem Drucker einfach angezeigt werden, dass in gewissen Abschnitten des Druckbilds ein Regelbedarf besteht.

Die Umwandlung der Daten, die Erzeugung der Stellsignale für die Stellglieder der Farbregeleinrichtung im Sinne der obigen Regelung sowie die Anzeige auf dem farbverbindlichen Monitor 7 erfolgt dabei inline während des Druckvorgangs in Echtzeit.

Beim erfindungsgemäßen Druckmaschinensteuerungssystem werden die nach dem Stand der Technik bislang als separate Einrichtungen ausgeführte Softproofeinrichtung und Farbregeleinrichtung in ihrer Funktionalität miteinander kombiniert, so dass die Vorteile beider Einrichtungen miteinander kombiniert werden können. Die Farbregeleinrichtung nutzt Sollwerte bzw. Referenzwerte, die aus Daten der Softproofeinrichtung generiert werden. Auf der Softproofeinrichtung können Daten angezeigt werden, die aus gemessenen Istdaten des oder jedes Sensors der Farbregeleinrichtung generiert werden.

### Bezugszeichenliste

- 1: Softproofeinrichtung
- 2: Farbregeleinrichtung
- 3: Druckvorstufendaten
- 4: Druckvorstufesystem
- 5: Einrichtung
- 6: Anzeigedaten
- 7: Monitor
- 8: Sensor
- 9: Istdaten
- 10: Einrichtung
- 11: Daten
- 12: Regler
- 13: Solldaten
- 14: Einrichtung
- 15: Einrichtung
- 16: Einrichtung
- 17: Anzeigedaten

## Patentansprüche

1. Druckmaschinensteuerungssystem, mit einer zumindest einen farbverbindlichen Monitor aufweisenden Softproofeinrichtung, und mit einer mindestens einen Sensor (8) aufweisenden Farbregeleinrichtung, wobei mit Hilfe des mindestens einen Sensors (8) ein bedruckter Bedruckstoff vermessen werden kann, wobei die Softproofeinrichtung zur Visualisierung mindestens eines als farbverbindliche Referenz für in einem Druckprozess gedruckte Druckexemplare dienenden Softproofs in einem Druckvorstufen-Farbraum vorliegende Druckvorstufendaten in Anzeigedaten eines Monitor-Farbraums wandelt, und wobei die Farbregeleinrichtung gemessene Istdaten des oder jeden Sensors oder aus den gemessenen Istdaten generierte Daten mit entsprechenden Solldaten vergleicht und abhängig hiervon Stellsignale für Stellglieder der Farbregeleinrichtung erzeugt, wobei der Druckvorstufen-Farbraum ein CMYK-Farbraum oder ein Spot-Color Farbraum und der Monitor-Farbraum ein RGB-Farbraum ist, **gekennzeichnet durch** mindestens eine Einrichtung (14, 15), welche die Druckvorstufendaten (3) des Druckvorstufen-Farbraums und die Anzeigedaten (6) des Monitor-Farbraums in Referenzdaten (13) eines farbmetrischen Farbraums wandelt, wobei die so aus den Daten (3, 6) der Softproofeinrichtung generierten Referenzdaten (13) als Solldaten der Farbregeleinrichtung dienen, sodass dieselbe aus einem Vergleich der gemessenen Istdaten (9) des oder jeden Sensors (8) oder der aus den gemessenen Istdaten generierten Daten (11) des oder jeden Sensors (8) mit den Referenzdaten (13) Stellsignale für die Stellglieder der Farbregeleinrichtung erzeugt,
wobei mindestens eine Einrichtung (16), welche die Istdaten (9) und/oder die aus den Istdaten generierten Daten (11) des oder jedes Sensors in Anzeigedaten (17) des Monitor-Farbraums wandelt, um mit dem oder jedem Sensor (8) gemessene Bilder auf mindestens einem farbverbindlichen Monitor (7) der Softproofeinrichtung anzuzeigen

2. Druckmaschinensteuerungssystem nach Anspruch 1,
**dadurch gekennzeichnet, dass** die gemessenen Istdaten (9) des oder jeden Sensors und/oder die aus den gemessenen Istdaten generierten Daten (11) im farbmetrischen Farbraum vorliegen.

3. Druckmaschinensteuerungssystem nach Anspruch 1,
**dadurch gekennzeichnet, dass** die aus den Istdaten des oder jedes Sensors generierten Anzeigedaten (17) und die aus den Druckvorstufendaten generierten Anzeigedaten (6) auf jeweils einem farbverbindlichen Monitor des Softproofeinrichtung getrennt voneinander anzeigbar sind.

4. Druckmaschinensteuerungssystem nach Anspruch 1,
**dadurch gekennzeichnet, dass** die aus den Istdaten des oder jedes Sensors generierten Anzeigedaten (17) und die aus den Druckvorstufendaten generierten Anzeigedaten (6) auf einem gemeinsamen farbverbindlichen Monitor des Softproofeinrichtung getrennt voneinander anzeigbar sind.

5. Druckmaschinensteuerungssystem nach Anspruch 1,
**dadurch gekennzeichnet, dass** die aus den Istdaten des oder jedes Sensors generierten Anzeigedaten (17) und die aus den Druckvorstufendaten generierten Anzeigedaten (6) auf einem gemeinsamen farbverbindlichen Monitor des Softproofeinrichtung derart gemeinsam miteinander anzeigbar sind, dass dieselben bildpunktgenau überlagerbar sind.

6. Druckmaschinensteuerungssystem nach einem der Ansprüche 1 bis 5,
**dadurch gekennzeichnet, dass** die aus den die Druckvorstufendaten (3) des Druckvorstufen-Farbraums und/oder aus den Anzeigedaten (6) des Monitor-Farbraums generierten Referenzdaten (13) dieselbe Auflösung aufweisen wie die gemessenen Istdaten (9) des oder jeden Sensors oder die aus den gemessenen Istdaten generierten Daten (11), die jeweils im farbmetrischen Farbraum vorliegen.

7. Druckmaschinensteuerungssystem nach einem der Ansprüche 1 bis 6,
**dadurch gekennzeichnet, dass** die aus den im Druckvorstufen-Farbraum vorliegenden Druckvorstufendaten (3) generierten Anzeigedaten (6), die im Monitor-Farbraums vorliegen, in etwa dieselbe Auflösung aufweisen wie die aus den Istdaten des oder jedes Sensors generierten Anzeigedaten (17), die ebenfalls im Monitor-Farbraums vorliegen.

8. Druckmaschinensteuerungssystem nach einem der Ansprüche 1 bis 7,
**dadurch gekennzeichnet, dass** die Erzeugung der Stellsignale für die Stellglieder der Farbregeleinrichtung inline während des Druckvorgangs auf der Druckmaschine erfolgt.

9. Druckmaschinensteuerungssystem nach einem der Ansprüche 1 bis 8,
**dadurch gekennzeichnet, dass** der Vergleich der gemessenen Istdaten (9) des oder jeden Sensors oder der aus den gemessenen Istdaten generierten Daten (11) mit den aus den Daten der Softproofeinrichtung erzeugten Referenzdaten (13) über das ganze Druckbild oder über definierte Abschnitte des Druckbilds erfolgt.

10. Druckmaschinensteuerungssystem nach einem der Ansprüche 1 bis 9,
**dadurch gekennzeichnet, dass** dann, wenn beim Vergleich der gemessenen Istdaten (9) des oder jeden Sensors oder der aus den gemessenen Istdaten generierten Daten (11) mit den Referenzdaten (13) festgestellt wird, dass in einem oder mehreren Abschnitten des Druckbilds eine einen definierten Grenzwert überscheitende Abweichung zwischen den jeweiligen Daten vorliegt, der jeweilige Abschnitt auf dem farbverbindlichen Monitor der Softproofeinrichtung abweichend von den Abschnitten darstellbar ist, bei welchen die Abweichung zwischen den jeweiligen Daten kleiner als der Grenzwert ist.

## Claims

1. A printing press control system with a soft proof device having at least one colour-consistent monitor and with an colour control device comprising at least one sensor (8), wherein with the help of the at least one sensor (8) a printed substrate can be measured, wherein the soft proof device for visualising at least one soft proof serving as colour-consistent reference for print copies printed in a printing process converts print prepress data present in a print prepress colour space into display data of a monitor colour space, and wherein the colour control device compares measured actual data of the or each sensor or data generated out of the measured actual data with corresponding set point data and dependent thereon generates adjusting signals for actuators of the colour control device, wherein the print prepress colour space is a CMYK colour space or a spot colour space and the monitor colour space an RGB colour space, **characterized by** at least one device (14, 15) which converts the prepress data (3) of the prepress colour space and the display data (6) of the monitor colour space into reference data (13) of an ink-metric colour space, wherein the reference data (13) so generated from the data (3, 6) of the soft proof device serve as set point data of the colour control device, so that the same out of a comparison of the measured actual data (9) of the or each sensor (8) or the data (11) generated out of the measured actual data of the or each sensor (8) with the reference data (13) generates adjusting signals for the actuators of the colour control device, wherein at least one device (16), which converts the actual data (9) and/or the data (11) generated out of the actual data of the or each sensor into display data (17) of the monitor colour space in order to display images measured with the or each sensor (8) on at least one colour-consistent monitor (7) of the soft proof device.

2. The printing press control system according to Claim 1, **characterized in that** the measured actual data (9) of the or each sensor and/or the data (11) generated out of the measured actual data are present in the colourmetric colour space.

3. The printing press control system according to Claim 1, **characterized in that** the display data (17) generated out of the actual data of the or each sensor and the display data (6) generated out of the prepress data can each be displayed separately from one another on a colour-consistent monitor of the soft proof device.

4. The printing press control system according to Claim 1, **characterized in that** the display data (17) generated out of the actual data of the or each sensor and the display data (6) generated out of the prepress data can be displayed separately from one another on a common colour-consistent monitor of the soft proof device.

5. The printing press control system according to Claim 1, **characterized in that** the display data (17) generated out of the actual data of the or each sensor and the display data (6) generated out of the prepress data can be displayed jointly with one another on a common colour-consistent monitor of the soft proof device in such a manner that the same can be superimposed pixel accurately.

6. The printing press control system according to any one of the Claims 1 to 5, **characterized in that** the reference data (13) generated out of the prepress data (3) of the prepress colour space and/or out of the display data (6) of the monitor colour space have the same resolution as the measured actual data (9) of the or each sensor or the data (11) generated out of the measured actual data, which in each case are present in the colourmetrical colour space.

7. The printing press control system according to any one of the Claims 1 to 6, **characterized in that** the display data (6) generated out of the prepress data (3) present in the prepress colour space, which are present in the monitor colour space, have approximately the same resolution as the display data (17) generated out of the actual data of the or each sensor, which are likewise present in the monitor colour space.

8. The printing press control system according to any one of the Claims 1 to 7, **characterized in that** generating the adjusting signals for the actuators of the colour control device takes place in line during the printing process on the printing press.

9. The printing press control system according to any one of the Claims 1 to 8, **characterized in that** the comparison of the measured actual data (9) of the or each sensor or the data (11) generated out of the measured actual data with the reference data (13) generated out of the data of the soft proof device takes place over the entire print image or over defined sections of the print image.

10. The printing press control system according to any one of the Claims 1 to 9, **characterized in that** in particular when during the comparison of the measured actual data (9) of the or each sensor or the data (11) generated out of the measured actual data with the reference data (13) it is determined that in one or multiple sections of the print image there is a deviation between the respective data that exceeds a defined limit value, the respective section can be displayed on the colour-consistent monitor of the soft proof device deviating from the sections, in which the deviation between the respective data is smaller than the limit value.

## Revendications

1. Système de commande de machine d'impression, comportant au moins un dispositif de test présentant un moniteur à couleurs contractuelles et au moins un dispositif de réglage chromatique présentant un capteur (8), dans lequel, à l'aide de l'au moins un capteur (8), un support d'impression imprimé peut être mesuré, dans lequel le dispositif de test, pour visualiser au moins un test servant de référence de couleur contractuelle pour des exemplaires imprimés lors d'un processus d'impression convertit des données préliminaires à l'impression présentes dans un espace chromatique préliminaire en données d'affichage d'un espace chromatique du moniteur et dans lequel le dispositif de réglage chromatique compare des données réelles mesurées du ou de chaque capteur ou des données générées à partir des données réelles mesurées à des données théoriques correspondantes et, en fonction de cela, génère des signaux de positionnement pour des éléments de positionnement du dispositif de réglage chromatique, dans lequel l'espace chromatique préliminaire à l'impression est un espace chromatique CMYK ou un espace chromatique à couleur d'accompagnement et l'espace chromatique du moniteur est un espace chromatique RGB, **caractérisé par** au moins un dispositif (14, 15) qui convertit les données préliminaires d'impression (3) de l'espace chromatique préliminaire et les données d'affichage (6) de l'espace chromatique du moniteur en données de référence (13) d'un espace chromatique colorimétrique, les données de référence (13) ainsi générées à partir des données (3, 6) du dispositif de test servant de données théoriques pour le dispositif de réglage chromatique, de sorte que celui-ci génère des signaux de positionnement pour les éléments de positionnement du dispositif de réglage chromatique à partir d'une comparaison des données réelles mesurées (9) du ou de chaque capteur (8) ou des données (11) générées à partir des données réelles mesurées du ou de chaque capteur (8) avec les données de référence (13), au moins un dispositif (16) qui convertit les données réelles mesurées (9) et/ou les données (11) générées à partir des données réelles mesurées du ou de chaque capteur en données d'affichage (17) de l'espace chromatique du moniteur afin d'afficher les images mesurées à l'aide du ou de chaque capteur (8) sur au moins un moniteur à couleurs contractuelles (7) du dispositif de test.

2. Système de commande de machine d'impression selon la revendication 1,
**caractérisé en ce que** les données réelles mesurées (9) du ou de chaque capteur et/ou les données (11) générées à partir des données réelles mesurées sont présentes dans l'espace colorimétrique.

3. Système de commande de machine d'impression selon la revendication 1,
**caractérisé en ce que** les données d'affichage (17) générées à partir des données réelles du ou de chaque capteur et les données d'affichage (6) générées à partir des données préliminaires à l'impression peuvent être affichées séparément les unes des autres respectivement sur un moniteur à couleurs contractuelles du dispositif de test.

4. Système de commande de machine d'impression selon la revendication 1,
**caractérisé en ce que** les données d'affichage (17) générées à partir des données réelles du ou de chaque capteur et les données d'affichage (6) générées à partir des données préliminaires à l'impression peuvent être affichées séparément les unes des autres respectivement sur un moniteur à couleurs contractuelles commun du dispositif de test.

5. Système de commande de machine d'impression selon la revendication 1,
**caractérisé en ce que** les données d'affichage (17) générées à partir des données réelles du ou de chaque capteur et les données d'affichage (6) générées à partir des données préliminaires à l'impression peuvent être affichées toutes ensemble respectivement sur un moniteur à couleurs contractuelles commun du dispositif de test de manière à être superposables au pixel près.

6. Système de commande de machine d'impression selon une des revendications 1 à 5,
**caractérisé en ce que** les données de référence (13) générées à partir des données préliminaires à l'impression (3) de l'espace chromatique préliminaire à l'impression et/ou les données de référence (13) générées à partir des données d'affichage (6) de l'espace chromatique du moniteur présentent la même définition que les données réelles mesurées (9) du ou de chaque capteur ou que les données (11) générées à partir des données réelles mesurées qui sont respectivement présentes dans l'espace chromatique colorimétrique.

7. Système de commande de machine d'impression selon une des revendications 1 à 6,
**caractérisé en ce que** les données d'affichage (6) générées à partir des données préliminaires à l'impression (3) présentes dans l'espace chromatique préliminaire à l'impression qui sont présentes dans l'espace chromatique du moniteur présentent à peu près la même définition que les données d'affichage (17) générées à partir des données réelles du ou de chaque capteur qui sont également présentes dans l'espace chromatique colorimétrique.

8. Système de commande de machine d'impression selon une des revendications 1 à 7,
**caractérisé en ce que** la génération des signaux de positionnement pour les éléments de positionnement du dispositif de réglage de couleur a lieu en ligne pendant le processus d'impression sur la machine d'impression.

9. Système de commande de machine d'impression selon une des revendications 1 à 8,
**caractérisé en ce que** la comparaison des données réelles mesurées (9) du ou de chaque capteur ou des données (11) générées à partir des données réelles mesurées avec les données de référence (13) générées à partir des données du dispositif de test a lieu sur toute l'image imprimée ou sur des sections définies de l'image imprimée.

10. Système de commande de machine d'impression selon une des revendications 1 à 9,
**caractérisé en ce que** si, lors de la comparaison des données réelles mesurées (9) du ou de chaque capteur ou des données (11) générées à partir des données réelles mesurées avec les données de référence (13), il est constaté que, dans une ou plusieurs sections de l'image imprimée, il y a un écart dépassant une valeur limite définie entre les données respectives, la section respective peut être représentée sur l'écran à couleurs contractuelles du dispositif de test différemment des sections pour lesquelles l'écart entre les données respectives est inférieur à la valeur limite.
